# EUROPÄISCHE PATENTSCHRIFT

(11) **EP 3 258 024 B1**
(45) Veröffentlichungstag und Bekanntmachung des Hinweises auf die Patenterteilung: **25.11.2020**
(21) Anmeldenummer: 16174639.1
(22) Anmeldetag: 15.06.2016
(51) Int. Cl.: E04B 1/68, B32B 7/04, A47K 3/00, C09J 7/29, B32B 5/02, B32B 5/26, B32B 7/12, B32B 9/04, B32B 15/02, B32B 15/06, B32B 15/08, B32B 15/14, B32B 25/10, B32B 25/18, B32B 27/12, B32B 27/40

(54) **FLIESENFUGENABDICHTBAND MIT SCHNITTSCHUTZ**
TILE JOINT SEALING TAPE WITH CUT PROTECTION
BANDE D'ÉTANCHÉITÉ DE JOINT DE CARRELAGE COMPRENANT UNE PROTECTION CONTRE LES COUPURES

(43) Veröffentlichungstag der Anmeldung: 20.12.2017
(73) Patentinhaber: SANIPAT GmbH, 6045 Meggen (CH)
(72) Erfinder: Gassmann, Urs, 6343 Rotkreuz (CH)
(74) Vertreter: Keller Schneider Patent- und Markenanwälte AG (Zürich)

(56) Entgegenhaltungen:
- CH-A1- 703 691
- DE-A1- 10 105 096
- DE-A1-102007 043 593
- FR-A1- 2 914 548

## Beschreibung

### Technisches Gebiet

Die Erfindung betrifft ein mehrlagiges Fliesenfugenabdichtband zum Hinterlegen von Silikonfugen.

### Technischer Hintergrund

Fliesenfugenabdichtbänder werden beim Verlegen von Fliesen wie Bodenfliesen oder Wandfliesen verwendet. Dabei werden sie meist im Bereich von Dehnfugen bei Boden-Boden-Verbindungen oder in Eckbereichen (Innen- und Aussenecken), z.B. Boden-Wand- oder Wand-Wand-Verbindungen, eingesetzt, um den Bereich von Silikonfugen verstärkt abzudichten.

Müssen die Silikonfugen ersetzt werden, werden diese häufig mit einem Messer herausgeschnitten. Dabei besteht die Gefahr, dass mit dem Messer auch das darunterliegende Dichtung durchschnitten oder durchstochen wird und sich so unbemerkt undichte Stellen in der Abdichtung ergeben.

Um solche Beschädigungen zu verhindern, wurde in CH703691 vorgeschlagen, silikonfugenseitig auf dem Dichtband im Bereich der Silikonfuge einen flexiblen, schnittfesten Streifen, sogenannte Schnittschutzstreifen, z.B. in Form einer Metallfolie, eines Metallgitters, oder aus anderem schnittfestem Materialien, anzuordnen.

Es hat sich nun gezeigt, dass beispielsweise bei der Verwendung von Metallfolien oder Metalldrahtgittern die scharfen Kanten oder die spitzen Drähte eine Verletzungsgefahr für den Fliesenleger darstellen kann. Auch besteht insbesondere bei Metalldrahtgittern die Gefahr, dass diese bei der Montage umbiegen und anschliessend nur schwer wieder an die Wand oder den Boden flach anliegend zurückgebogen werden können, was wiederum zu fehleranfälligem Verlegen der Fliesen und zu erhöhter Verletzungsgefahr führen kann.

Vollflächig angeklebten Schnittschutzstreifen könne zwar ein unerwünschtes Umbiegen oder eine Verletzungsgefahr verringern, aber sie führen zu einem unerwünschten Verlust der Dehnbarkeit des Fliesenfugenabdichtbandes im Bereich von Dehnfugen oder wenn Absetzungen zu erwarten sind.

### Darstellung der Erfindung

Eine Aufgabe der Erfindung besteht darin, ein Fliesenfugenabdichtband anzugeben, welche die obigen Nachteil nicht aufweist.

Diese Aufgabe wird durch ein mehrlagiges Fliesenfugenabdichtband mit den Merkmalen des Anspruch 1 gelöst. Das erfindungsgemässe mehrlagige Fliesenfugenabdichtband zum Hinterlegen von Silikonfugen, umfasst ein wasserdichtes, biegsames Trägerband und mindestens einen biegsamen, schnittfesten Streifen (ein sogenannter Schnittschutzstreifen). Mindestens ein schnittfester Streifen ist über die gesamte Länge des Fliesenfugenabdichtbands derart angeordnet, dass beidseitig des schnittfesten Streifens ein Randstreifen des Trägerbands frei vom schnittfesten Streifen ist, d.h. nicht durch den schnittfesten Streifen abgedeckt ist, und dass der schnittfeste Streifen im eingebauten Zustand des Fliesenfugenabdichtbandes im Bereich der Silikonfuge liegt, (d.h. der Bereich der Dichtung, welcher unter der Silikonfuge zu liegen kommt, ist durch den schnittfesten Streifen vor Zerschneiden oder Durchstechen gescchützt). Das Trägerband weist eine auf dem schnittfesten Streifen aufliegende Schutz- und Halteschicht auf, welche wenigstens an einer Seite des schnittfesten Streifens mit dem freiliegenden Streifen des Trägerbands fest verbunden ist.

Auf diese Weise ist der schnittfeste Streifen und insbesondere allfällige ansonsten freiliegende, scharfe Kanten oder spitze Drähte durch die aufliegende Schutz- und Halteschicht geschützt. Ein unerwünschtes Umbiegen der schnittfesten Streifen beim Einbau des Fliesenfugenabdichtbandes wird ebenfalls effizient verhindert. Zudem sind nicht festgeklebte oder nur teilweise verklebte schnittfeste Streifen durch die Schutz- und Halteschicht gegenüber Verschiebungen fixiert, wobei die Schutz- und Halteschicht allfällige Dehnungen des Trägerband im Fugenbereich noch zulassen kann. Ein weiter Vorteil liegt darin, dass ein Fliesenkleber besser am Fliesenfugenabdichtband haften kann, insbesondere auch im Bereich des schnittfesten Streifens, z.B wenn dieser als Metallfolie vorliegt.

Der schnittfeste Streifen ist bevorzugt in einem mittleren Teilbereich des Trägerbandes oder, wenn das Fliesenfugenabdichtband in eine Ecke verlegt werden soll, an eine Faltlinie des Trägerbandes angrenzend über die gesamte Länge des Fliesenfugenabdichtbands angeordnet.

In einigen Ausführungsformen ist die Schutz- und Halteschicht weniger als 0.5 mm dick, so dass sie die Biegsamkeit des Trägerbands kaum beeinflusst. Die Schutz- und Halteschicht ist erfindungsgemäß ein textiles Flächengebilde, insbesondere ein Vliesstoff, aus Polypropylene oder Polyethylen. Das textile Flächengebilde kann dehnbar ausgebildet sein, so dass eine allfällige Dehnbarkeit des Trägerbands wenigstens teilweise zugelassen wird. Die Schutz- und Halteschicht kann auch eine Schicht aus Elastomer, Polyurethan, Gummi oder Butyl sein, welche beispielsweise in flüssiger Form aufgetragen und anschliessend ausgehärtet ist. Die Schutz- und Halteschicht kann die freiliegenden Streifen des Trägerbands ganz oder nur teilweise überdecken.

In einigen Ausführungsformen kann das Trägerband und/oder die Schutz- und Halteschicht ein Elastomerband, ein Polyurethanband, ein Gummiband oder ein Butylband sein. Das Trägerband kann faserverstärkt sein.

In einigen Ausführungsformen kann der schnittfeste Streifen ausgewählt sein aus der Gruppe von Metallfolie, Metalldrahtgitter, Aramidgewebe, Karbongewebe, Basaltgewebe, Gewebe aus Ultrahochmolekulargewicht Polyethylen (Ultra-High-Molecular-Weight Polyethylen, UHMW-PE, Dyneema®). Der schnittfeste Streifen bietet genügend Wiederstand, um beim Herauslösen einer Silikondichtung, was typischerweise mit einem Spachtel oder Messer, z.B. ein Teppichmesser gemacht wird, eine unbeabsichtigtes Durchschneiden oder Durchstechen der dahinterliegenden Dichtung bis zu einer beim Herauslösen von Silikondichtungen üblichen Krafteinwirkung zu verhindern.

Das Fliesenfugenabdichtband kann eine Dehnbarkeit aufweisen, so dass es an allfällige Verschiebungen im Bereich von Dehnfugen anpassen kann, ohne beschädigt zu werden resp. die Dichtwirkung zu verlieren.

In einigen Ausführungsformen kann zwischen dem Trägerband und dem schnittfesten Streifen wenigstens teilweise eine Klebeschicht vorhanden sein. Diese kann den schnittfesten Streifen vollflächig abdecken oder lediglich einen Randbereich in Längsrichtung abdecken. Im zweiten Fall lässt der schnittfeste Streifen eine Dehnung des Trägerbands in einem wesentlichen Bereich des schnittfesten Streifens noch zu.

In einigen Ausführungsformen kann das Trägerband weniger als 5 mm, vorzugsweise weniger als 2 mm dick sein.

In einigen Ausführungsformen kann die vom schnittfesten Streifen abgewandte Seite des Trägerbands mit einem textilen Flächengebilde, insbesondere ein Vliesstoff, aus Polypropylene oder Polyethylen versehen sein, welches mit dem Trägerband ebenfalls fest verbunden ist. Das textile Flächengebilde ist vorzugsweise weniger als 0.5 mm dick.

In einigen Ausführungsformen kann das Trägerband an der vom schnittfesten Streifen abgewandte Seite eine Klebeschicht aufweisen. Die Klebeschicht kann mit einem abziehbaren Abdeckstreifen versehen sein. Der abziehbare Abdeckstreifen kann zweiteilig sein oder etwa mittig eine in Längsrichtung des Fliesenabdichtbandes verlaufende Perforation aufweisen. Ein solche Zweiteilung oder die Perforation dient zur einfacheren Verlegung des Fliesenfugenabdichtbandes in einem Eckbereich. Dabei wird beim Verlegen zuerst der erste Teil des Abdeckstreifens abgezogen, um das Band mit einem ersten Bereich an den Boden oder die Wand an einer ersten Seite der Ecke anzukleben. Anschliessend wird der zweite Teil des Abdeckstreifens abgezogen um das restliche Band am Boden oder Wand an der zweiten Seite der Ecke anzukleben. Die Zweiteilung oder die Perforation ist dann in dem Bereich angeordnet, in dem das Fliesenfugenabdichtband um die Ecke gebogen wird.

In einigen Ausführungsformen kann das Trägerband an beiden Rändern in Längsrichtung des Fliesenabdichtbandes verlaufende, textile Flächengewirke aufweisen, welche teilweise mit dem Trägerband überlappen und im Überlappungsbereich mit dem Trägerband fest verbunden, z.B. verklebt, kaschiert oder verschweisst, sind.

In einigen Ausführungsformen kann die auf dem schnittfesten Streifen aufliegende Schutz- und Halteschicht wenigstens einen Längsrandbereich des schnittfesten Streifens abdecken. In der Regel ist dann die Schutz- und Halteschicht mit dem Längsrandbereich des schnittfesten Streifens verbunden.

In einigen Ausführungsformen kann die auf dem schnittfesten Streifen aufliegende Schutz- und Halteschicht den schnittfesten Streifen vollständig abdecken und beidseitig vom schnittfesten Streifens (2) mit den freiliegenden Streifen des Trägerbands fest verbunden sein.

Im Übrigen bietet es sich an, in Verbindung mit der erfindungsgemässen Fliesenfugenabdichtband nachfolgende Merkmale für sich oder in beliebiger Kombination mit den vorangenannten Merkmalen zu verwirklichen:
- Auf der Vorder- und/oder Rückseite des Fliesenfugenabdichtband ist in Längsrichtung mindestens ein Schallentkopplungsstreifen, z.B. ein Dämmstreifen aus Schaumstoff, angebracht. - Auf der Vorderseite des Fliesenfugenabdichtbandes ist ein Kapillarschutzstreifen angeordnet.
- Auf der Vorderseite des Fliesenfugenabdichtbandes ist ein Fugenhinterfüllprofil angeordnet.
- Vorder- und/oder Rückseite des Fliesenfugenabdichtbandes kann teilweise oder ganz mit einer Kleberschicht versehen sein.
- Vorgefertigte Eckelemente für Innenecken oder Aussenecken, vorgefertigte assymetrische Winkelprofile oder vorgefertigte Gefällsprofile für Böden mit Gefällen in eine oder mehrere Richtungen die aus dem Fliesenfugenabdichtband gefertigt sind.
- Die Breite des schnittfesten Streifens entspricht etwa 10 bis 40 Prozent der Breite des Trägerbandes.
- Der freiliegende Bereich des Trägerbandes beidseitig des schnittfesten Streifens ist mindestens 10 mm breit.

Die Erfindung betrifft weiter eine Verwendung eines voran beschriebenen Fliesenabdichtbandes zum Hinterlegen von Silikonfugen, bei Boden-Boden-, Boden-Wand-, oder Wand-Wand-Verbindungen oder bei Verbindungen zwischen einem Einbaugegenstand, insbesondere Bade- oder Duschwanne, und einem Boden oder einer Wand.

### Kurze Erläuterung zu den Figuren

Die Erfindung soll nachfolgend anhand von Ausführungsbeispielen im Zusammenhang mit der(n) Zeichnung(en) näher erläutert werden. Es zeigen:
- Fig. 1: eine Schnittdarstellung einer Ausführungsform eines erfindungsgemässen Fliesenfugenabdichtbandes;
- Fig. 2: eine Schnittdarstellung einer weiteren Ausführungsform eines erfindungsgemässen Fliesenfugenabdichtbandes;
- Fig. 3: eine Schnittdarstellung einer noch weiteren Ausführungsform eines erfindungsgemässen Fliesenfugenabdichtbandes;
- Fig. 4: eine Einbauvariante eine Fliesenfugenabdichtbands bei Boden-Boden verlegten Fliesen;
- Fig. 5: eine Einbauvariante bei einer Innenecke; und
- Fig. 6: eine Schnittdarstellung einer noch weiteren Ausführungsform eines erfindungsgemässen Fliesenfugenabdichtbandes.

### Wege zur Ausführung der Erfindung

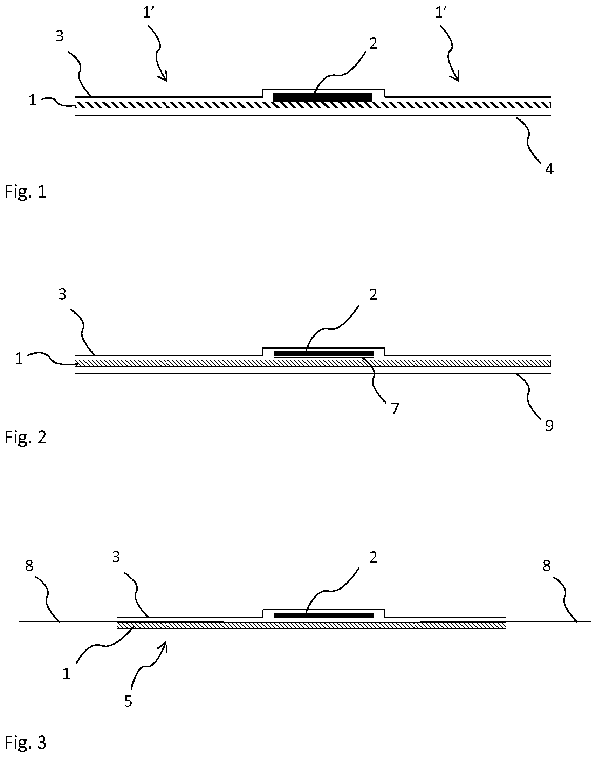

In den Figuren 1 bis 3 sind schematisch verschiedene Ausführungsformen eines erfindungsgemässen Fliesenfugenabdichtbandes mit teilweise austauschbaren Merkmalen gezeigt.

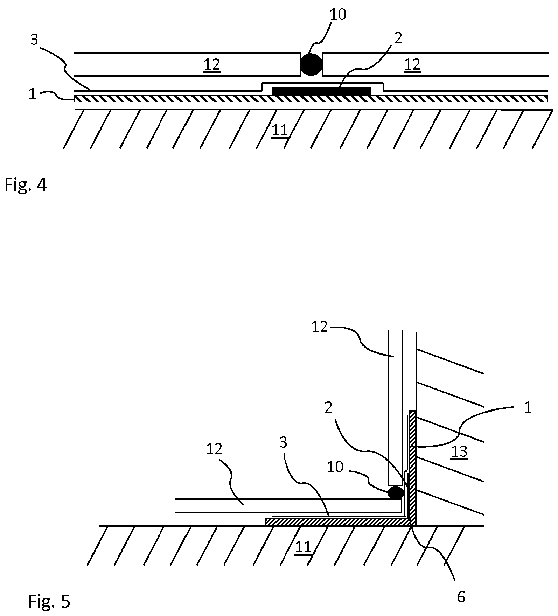

Das in Fig. 1 gezeigte Fliesenfugenabdichtband weist eine Trägerband 1 z.B. in der Form eines Butylbandes auf. In etwa mittig oder angrenzend an eine in etwa mittig angeordnete Faltlinie 6 (wie in Fig. 5 gezeigt) und über die gesamte Länge des Trägerbands ist ein schnittfester Streifen 2, z.B. eine Metallfolie oder ein Metalldrahtgitter, aufgeklebt. über dem Streifen 2 ist eine Schutz- und Halteschicht 3 z.B. in Form eines dünnen Vliesstoff angeordnet, welcher beidseitig vom schnittfesten Streifen mit dem freiliegenden Streifen des Butylbands verklebt ist. auf der dem schnittfesten Streifen gegenüberliegenden Seite ist eine Abdeckstreifen 4 auf einer Klebeschicht aufgezogen, welche vor dem Verlegen des Fliesenfugenabdichtbandes abgezogen wird.

Das Fliesenfugenabdichtband in Fig. 2 weist im Unterschied zum Fliesenfugenabdichtband in Fig. 1 ein Trägermaterial 1 aus einem Elastomer auf. Etwa mittig oder entlang der Faltlinie 6 (wie in Fig. 5 gezeigt) ist der schnittfeste Streifen 2 angeordnet und mittels einer Kleberschicht 7 aufgeklebt. Die Klebeschicht 7 kann auch weggelassen werden (Fig. 3), um im mittleren Bereich eine höhere Dehnbarkeit zu erhalten. Auf der dem schnittfesten Streifen 2 gegenüberliegende Seite des Trägerbands 1 ist ein textiles Flächengebilde, z.B. zweiter Vliesstoff aufkaschiert.

Das Fliesenfugenabdichtband in Fig. 3 weist im Unterschied zum Fliesenfugenabdichtband in Fig. 2 zusätzlich beidseitig am Trägerband 1 entlang den beiden Rändern angehängte Flächengewirke 8 auf, welche teilweise mit dem Trägerband 1 überlappen und im Überlappungsbereich 5 angeklebt sind.

Fig. 4 zeigt ein Fliesenfugenabdichtband im Einbauzustand auf einem Boden 11 angebracht. Darüber sind Fliesen 12 verlegt. Der mittig auf dem Trägerband 1 angebrachte schnittfeste Streifen 2 liegt hinter der Silikonfuge 10 zwischen zwei Fliesen 12. Fliesenkleber, Dichtschlämme oder allfällige weitere Abdichtbänder und -bahnen sind nicht dargestellt.

Fig. 5 zeigt im Unterschied zu Fig. 4 eine Einbauvariante des Fliesenfugenabdichtbandes in einer Innenecke zwischen Boden 11 und Wand 13. Der schnittfeste Streifen ist hier angrenzend an eine Faltlinie 6 des Trägerbandes 1 angeordnet und kommt so ebenfalls hinter der Silikonfuge 10 zu liegen.

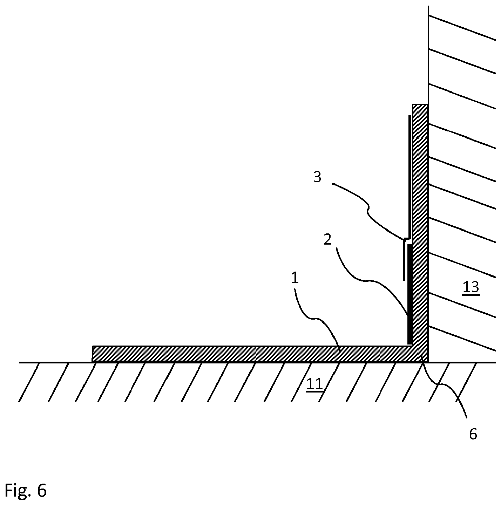

Fig. 6 zeigt ein in eine Ecke verlegtes Fliesenfugenabdichtband. Im Unterschied zu den voran dargestellten Fliesenfugenabdichtbändern ist beim Fliesenfugenabdichtband auf Fig. 6 der schnittfeste Streifen 2 nur teilweise von der Schutz- und Halteschicht 3 überdeckt. D.h. die Schutz- und Halteschicht 3 überdeckt lediglich einen Längsrandbereich des schnittfesten Streifen und ist mit diesem Bereich verbunden. Diese Ausführungsform ist z.B. für den Einbau in Eckbereichen oder an Wänden geeignet, wo ohne Schutz-und Halteschicht 3 die Gefahr eines Umbiegens des nach oben gerichteten Längsrandes des schnittfestens Streifens bestehen würde.

### Bezeichnungsliste

- 1: Trägerband
- 1': freiliegender Bereich / Randbereich des Trägerbands
- 2: schnittfester Streifen
- 3: Schutz- und Halteschicht
- 4: Abdeckstreifen
- 5: Überlappungsbereich
- 6: Faltlinie
- 7: Klebeschicht
- 8: Flächengewirke
- 9: textiles Flächengebilde
- 10: Silikondichtung
- 11: Boden
- 12: Fliesen
- 13: Wand

## Patentansprüche

1. Mehrlagiges Fliesenfugenabdichtband zum Hinterlegen von Silikonfugen (10), umfassend ein wasserdichtes, biegsames Trägerband (1) und mindestens einen biegsamen, schnittfesten Streifen (2); wobei mindestens ein schnittfester Streifen (2) über die gesamte Länge des Fliesenfugenabdichtbands derart angeordnet ist, dass beidseitig des schnittfesten Streifens (2) ein Randstreifen (1') des Trägerbands (1) frei vom schnittfesten Streifen (2) ist und dass der schnittfeste Streifen (2) im eingebauten Zustand des Fliesenfugenabdichtband im Bereich der Silikonfuge (10) liegt, **dadurch gekennzeichnet, dass** das Trägerband (1) eine auf dem schnittfesten Streifen (2) aufliegende Schutz- und Halteschicht (3) aus einem textilen Flächengebilde, insbesondere ein Vliesstoff, aus Polypropylene oder Polyethylen, aufweist, welche wenigstens an einer Seite des schnittfesten Streifens (2) mit dem freiliegenden Streifen (1') des Trägerbands (1) fest verbunden ist.

2. Mehrlagiges Fliesenfugenabdichtband, nach einem der vorangehenden Ansprüche, **dadurch gekennzeichnet, dass** das Trägerband (1) ein Elastomerband, ein Polyurethanband, ein Gummiband oder ein Butylband ist.

3. Mehrlagiges Fliesenfugenabdichtband, nach einem der vorangehenden Ansprüche, **dadurch gekennzeichnet, dass** zwischen dem Trägerband (1) und dem schnittfesten Streifen (2) wenigstens teilweise eine Klebeschicht (7) vorhanden ist.

4. Mehrlagiges Fliesenfugenabdichtband, nach einem der vorangehenden Ansprüche, **dadurch gekennzeichnet, dass** die vom schnittfesten Streifen (2) abgewandte Seite des Trägerbands (1) mit einem textilen Flächengebilde (9), insbesondere ein Vliesstoff, aus Polypropylene oder Polyethylen versehen ist, welches mit dem Trägerband (1) fest verbunden ist.

5. Mehrlagiges Fliesenfugenabdichtband, nach einem der vorangehenden Ansprüche, **dadurch gekennzeichnet, dass** das Trägerband (1) an der vom schnittfesten Streifen (2) abgewandte Seite eine wenigstens teilweise angebrachte Klebeschicht aufweist.

6. Mehrlagiges Fliesenfugenabdichtband nach Anspruch 5, **dadurch gekennzeichnet, dass** die Klebeschicht mit einem abziehbaren Abdeckstreifen (4) versehen ist.

7. Mehrlagiges Fliesenfugenabdichtband nach einem der Ansprüche 5 oder 6, **dadurch gekennzeichnet, dass** der abziehbare Abdeckstreifen (4) zweiteilig ist oder etwa mittig eine in Längsrichtung des Fliesenabdichtbandes verlaufende Perforation aufweist.

8. Mehrlagiges Fliesenfugenabdichtband, nach einem der vorangehenden Ansprüche, **dadurch gekennzeichnet, dass** das Trägerband (1) an beiden Rändern in Längsrichtung des Fliesenabdichtbandes verlaufende, textile Flächengewirke (8) aufweist, welche teilweise mit dem Trägerband (1) überlappen und im Überlappungsbereich (5) mit dem Trägerband (1) fest verklebt sind.

9. Mehrlagiges Fliesenfugenabdichtband, nach einem der vorangehenden Ansprüche, **dadurch gekennzeichnet, dass** die auf dem schnittfesten Streifen (2) aufliegende Schutz- und Halteschicht (3) wenigstens einen Längsrandbereich des schnittfesten Streifen abdeckt.

10. Mehrlagiges Fliesenfugenabdichtband, nach einem der Ansprüche 1 bis 10, **dadurch gekennzeichnet, dass** die auf dem schnittfesten Streifen (2) aufliegende Schutz- und Halteschicht (3) den schnittfesten Streifen vollständig abdeckt und beidseitig vom schnittfesten Streifens (2) mit den freiliegenden Streifen (1') des Trägerbands (1) fest verbunden ist.

11. Verwendung eines Fliesenabdichtbandes nach einem der vorangehenden Ansprüche zum Hinterlegen von Silikonfugen (10), bei Boden-Boden-, Boden-Wand-, oder Wand-Wand-Verbindungen oder bei Verbindungen zwischen einem Einbaugegenstand, insbesondere Bade- oder Duschwanne, und einem Boden oder einer Wand.

## Claims

1. A multi-ply tile joint sealing tape for backing silicone joints (10) comprising a waterproof flexible backing tape (1) and at least one flexible cut-resistant strip (2); wherein at least one cut-resistant strip (2) is arranged over the entire length of the tile joint sealing tape in such a way that on both sides of the cut-resistant strip (2) an edge strip (1') of the carrier tape (1) is free of the cut-resistant strip (2) and that the cut-resistant strip (2) lies in the region of the silicone joint (10) in the installed state of the tile joint sealing tape, **characterised in that** the carrier tape (1) has a protective and retaining layer (3) of a textile fabric, in particular a non-woven fabric, of polypropylene or polyethylene, which rests on the cut-resistant strip (2) and is firmly connected to the exposed strip (1') of the carrier tape (1) at least on one side of the cut-resistant strip (2).

2. Multi-layer tile joint sealing tape, according to any of the preceding claims, **characterised in that** the carrier tape (1) is an elastomeric tape, a polyurethane tape, an elastic tape or a butyl tape.

3. Multi-layer tile joint sealing tape according to one of the preceding claims, **characterised in that** between the carrier tape (1) and the cut-resistant strip (2) there is at least partially an adhesive layer (7).

4. Multilayer tile joint sealing tape according to one of the preceding claims, **characterised in that** the side of the carrier tape (1) facing away from the cut-resistant strip (2) is provided with a textile fabric (9), in particular a non-woven fabric, made of polypropylene or polyethylene, which is firmly connected to the carrier tape (1).

5. Multi-layer tile joint sealing tape, according to one of the preceding claims, **characterised in that** the carrier tape (1) has an at least partially applied adhesive layer on the side facing away from the cut-resistant strip (2).

6. Multi-layer tile joint sealing tape according to claim 5, **characterised in that** the adhesive layer is provided with a peelable cover strip (4).

7. Multi-layer tile joint sealing tape according to one of claims 5 or 6, **characterised in that** the peelable cover strip (4) is in two parts or has a perforation running approximately in the middle in the longitudinal direction of the tile sealing tape.

8. Multi-ply tile joint sealing tape according to one of the preceding claims, **characterised in that** the carrier tape (1) has at both edges textile surface knitted fabrics (8) running in the longitudinal direction of the tile sealing tape, which partially overlap with the carrier tape (1) and are firmly bonded to the carrier tape (1) in the overlap region (5).

9. Multi-layer tile joint sealing tape, according to one of the preceding claims, **characterised in that** the protective and retaining layer (3) lying on the cut-resistant strip (2) covers at least one longitudinal edge region of the cut-resistant strip.

10. Multi-layer tile joint sealing tape, according to one of the preceding claims 1 to 10, **characterized in that** the protective and retaining layer (3) resting on the cut-resistant strip (2) completely covers the cut-resistant strip and is firmly connected on both sides of the cut-resistant strip (2) to the exposed strips (1') of the carrier tape (1).

11. Use of a tile sealing tape in accordance with one of the preceding claims for the backing of silicone joints (10), for floor-to-floor, floor-to-wall or wall-to-wall joints or for joints between a built-in object, in particular a bathtub or shower tray, and a floor or a wall.

## Revendications

1. Bande d'étanchéité multicouche pour joints de carreaux pour le support de joints en silicone (10) comprenant une bande de support flexible imperméable (1) et au moins une bande flexible résistant aux coupures (2); dans lequel au moins une bande de protection contre les coupures (2) est disposée sur toute la longueur de la bande de scellement de joints de carreaux de telle sorte que, des deux côtés de la bande de protection contre les coupures (2), une bande de bordure (1') de la bande de support (1) est exempte de la bande de protection contre les coupures (2) et que la bande de protection contre les coupures (2) se trouve dans la zone du joint en silicone (10) à l'état monté de la bande de scellement de joints de carreaux, **caractérisé en ce que** la bande de support (1) présente une couche de protection et de maintien (3) en un tissu textile, en particulier un non-tissé, en polypropylène ou en polyéthylène, qui repose sur la bande anti-coupure (2) et qui est fermement reliée à la bande exposée (1') de la bande de support (1) au moins sur un côté de la bande anti-coupure (2).

2. Bande d'étanchéité multicouche pour joints de carreaux, selon l'une des revendications précédentes, **caractérisée en ce que** la bande de support (1) est une bande élastomère, une bande de polyuréthane, une bande élastique ou une bande de butyle.

3. Une bande d'étanchéité multicouche pour joints de carreaux selon l'une des revendications précédentes, **caractérisée en ce qu'**une couche adhésive (7) est au moins partiellement présente entre la bande de support (1) et la bande résistant à la coupure (2).

4. Bande d'étanchéité multicouche pour joints de carreaux selon l'une des revendications précédentes, **caractérisée en ce que** le côté de la bande de support (1) opposé à la bande anti-coupures (2) est pourvu d'un tissu textile (9), en particulier d'un non-tissé, en polypropylène ou en polyéthylène, qui est fermement relié à la bande de support (1).

5. Bande d'étanchéité multicouche pour joints de carreaux, selon l'une des revendications précédentes, **caractérisée en ce que** la bande de support (1) présente une couche adhésive au moins partiellement appliquée sur le côté opposé à la bande résistant à la coupure (2).

6. Bande d'étanchéité multicouche pour joints de carreaux selon la revendication 5, **caractérisée en ce que** la couche adhésive est pourvue d'une bande de recouvrement pelable (4).

7. Bande d'étanchéité multicouche pour joints de carreaux selon l'une des revendications 5 ou 6, **caractérisée en ce que** la bande de recouvrement pelable (4) est en deux parties ou présente une perforation s'étendant approximativement au milieu dans la direction longitudinale de la bande d'étanchéité pour joints de carreaux.

8. Bande d'étanchéité multicouche pour joints de carreaux selon l'une des revendications précédentes, **caractérisée en ce que** la bande de support (1) présente sur ses deux bords des tricots de surface textiles (8) s'étendant dans la direction longitudinale de la bande d'étanchéité pour joints de carreaux, qui chevauchent partiellement la bande de support (1) et sont solidement collés à la bande de support (1) dans la zone de chevauchement (5).

9. Bande d'étanchéité multicouche pour joints de carreaux, selon l'une des revendications précédentes, **caractérisée en ce que** la couche de protection et de maintien (3) reposant sur la bande anti-coupure (2) recouvre au moins une zone de bord longitudinal de la bande anti-coupure.

10. Bande d'étanchéité multicouche pour joints de carreaux, selon l'une des revendications précédentes 1 à 10, **caractérisée en ce que** la couche de protection et de maintien (3) reposant sur la bande résistante à la coupure (2) recouvre complètement la bande résistante à la coupure et est solidement reliée des deux côtés de la bande résistante à la coupure (2) aux bandes exposées (1') de la bande de support (1).

11. L'utilisation d'une bande d'étanchéité pour carrelage conformément à l'une des revendications précédentes pour le support de joints en silicone (10), dans le cas de joints de sol à sol, de sol à mur ou de mur à mur ou dans le cas de joints entre un objet d'installation, en particulier une baignoire ou un bac de douche, et un sol ou un mur.
